# EUROPEAN PATENT APPLICATION

(11) **EP 1 113 651 A2**
(43) Date of publication of application: **04.07.2001**
(21) Application number: 00306341.9
(22) Date of filing: 26.07.2000
(51) Int. Cl.: H04M 1/253

(54) **Protocol conversion and translation module for terminal applications**

(30) Priority: 27.12.1999 US 472913
(71) Applicant: Nortel Networks Corporation, Montreal, Quebec H2Y 3Y4 (CA)
(72) Inventor: Chaput, Guy John, Pakenham, Ontario K0A 2X0 (CA); Webster, William Thomas, Nepean, Ontario K2J 2E3 (CA)
(74) Representative: Mackenzie, Andrew Bryan

(57) **Abstract**

A telephone main unit, and various plug-in modules which can be installed in the telephone main unit are provided. The telephone main unit has user interface hardware, a data network interface operating on a first external protocol, one or more processors adapted to interact with the user interface hardware through the use of local protocol messages, and an interface for receiving the plug-in module. With this arrangement, local protocol commands generated by the hardware are divertable to the plug-in module. Commands of the first external protocol received over the data network interface are divertable to the plug-in module. Local protocol commands received from the plug-in module which relate to the user interface hardware are used to control the user interface hardware. Finally, commands of said first external protocol received from the plug-in module are sent through the data network interface. In some embodiments, there is no network connection, and the main unit only needs to communicate with the plug-in module. The plug-in module having one or more processors adapted to interact with the main unit through the use of local protocol messages, and an interface for connecting to the main unit. The plug-in module s adapted to receive local protocol commands from the main unit through the interface, receive commands of a first external protocol through the interface, generate local protocol commands to control the main unit's user interface and pass these to the main unit through the interface, and generate commands of the first external protocol and pass these to the main unit through the interface.

## Description

### Field of the Invention

The invention relates to telephone sets, and more particularly to telephone sets having plug-in module capabilities. Still more particularly, the invention relates to protocol conversion and translation modules for terminal applications.

### Background of the Invention

Traditionally, a private branch exchange (PBX) has been used to provide telephone services to a network of local telephones. The PBX may exist in parallel with a local area network (LAN) which provides data services to a network of local computers. It has been contemplated to provision a LAN not only with computers but also with special telephones so that the network can provide telephony services in addition to data services thereby avoiding the need for parallel networks. In a known system, IP telephones connect to the LAN backbone as does a call manager (which is a server configured with call management software) and a gateway to the public switched telephone network (PSTN). The IP telephones include a vocoder so that audio signals may be converted between analog and IP packets. The call manager has a configuration file for each telephone on the LAN assigning call functions to certain of the buttons on the phone, which call functions will be handled by the call manager. Other call functions (e.g., "mute") are handled by the telephone itself. When the call manager receives keypad digits from a calling phone on the LAN indicative of a called station, it sets up a call by instructing the calling phone to set up a Real-Time Protocol (RTP) audio stream to either the called telephone, if the called telephone is on the LAN, or to the gateway, if the called telephone is on the PSTN. Once the call is set up, the call manager is out of the loop unless the call manager receives a key press indication indicative of a call control function handled by the call manager, such as a call transfer, call hold, call forward, call park, multiple line appearance, or disconnect.

In such systems, the phones have fixed functionality, and introducing new functionality requires either a new telephone or a new call manager, or both. Each of these solutions is an expensive one. Providing a specific server to function as a call manager is particularly prohibitive in smaller networks.

### Summary of the Invention

Embodiments of the invention provide a telephone main unit, and various plug-in modules which can be installed in the telephone main unit.

One broad aspect provides telephone main unit for use in combination with a plug-in module, the telephone main unit having user interface hardware, one or more processors adapted to interact with the user interface hardware through the use of local protocol messages, and an interface for receiving the plug-in module. With this arrangement, local protocol commands generated by the hardware are divertable to the plug-in module. Local protocol commands received from the plug-in module which relate to the user interface hardware are used to control the user interface hardware. In some embodiments, there is no network connection, and the main unit only needs to communicate with the plug-in module. Preferably, however, the main unit includes a data network interface operating on a first external protocol in which case commands of the first external protocol, received over the data network interface are divertable to the plug-in module and commands of said first external protocol received from the plug-in module are sent through the data network interface.

Preferably, the main unit is adapted to establish a media stream and a control path between the network connection and the plug-in module and/or to establish a media stream and a control path between the plug-in module the user interface hardware, and/or to establish a control path from the network connection to the plug-in module, and back from the plug-in module to the user interface hardware, and to establish a media stream path between the network connection and the user interface hardware.

Preferably, the main unit is capable of sustaining multiple media and control paths. For example, the main unit may be configured to establish a first media stream and a first control path between the network connection and the plug-in module and to establish a second media stream and a second control path between the plug-in module and the user interface hardware.

Alternatively, the main unit may be configured to establish a first media stream and a first control path between the network connection and the plug-in module and to establish a second control path from the network connection to the plug-in module, and back from the plug-in module to the user interface hardware, and to establish a second media stream path between the network connection and the user interface hardware.

Alternatively, the main unit may be configured to establish a first media stream and a first control path between the network connection and the plug-in module and to establish a second control path from the network connection to the user interface hardware, and to establish a second media stream path between the network connection and the user interface hardware.

Preferably, all messaging between the main unit and the plug-in cartridge are local protocol commands, and/or external protocol commands encapsulated in the local protocol.

A further embodiment provides the main unit in combination with a plug-in module.

Another broad aspect provides a plug-in module for use in combination with a telephone main unit, the plug-in module having one or more processors adapted to interact with the main unit through the use of local protocol messages, and an interface for connecting to the main unit. The plug-in module is adapted to receive local protocol commands from the main unit through the interface, receive commands of a first external protocol through the interface, generate local protocol commands to control the main unit's user interface and pass these to the main unit through the interface, and generate commands of the first external protocol and pass these to the main unit through the interface.

Preferably, the plug-in module has an external interface, and is further adapted to communicate through the external interface using a second external protocol.

Various media and control streams may be established through the use of the plug-in module. For example, the plug-in module may be adapted to establish both media stream and control paths from the external interface to the main unit in the local protocol. The plug-in module may be adapted to take control through the control path of user interface hardware in the main unit.

Alternatively, the plug-in module may be adapted to establish a control path from the main unit and back. Alternatively, the plug-in module may be adapted to establish a first media stream and a first control path between the second external interface and the main unit for subsequent direction out a main unit external interface, and to establish a second media stream and a second control path from the external interface to the main unit for subsequent direction to control the main unit's user interface hardware. Alternatively, the plug-in module may be adapted to establish a first media stream and a first control path between the second external interface and the main unit for subsequent direction out the main unit's first external interface, and to establish a second control path from the main unit through the plug-in module and back to the main unit.

Preferably, the plug-in module performs a translation from the first external protocol to the local protocol, and/or performs a translation from the second external protocol to the local protocol, and/or performs a translation from the second external protocol to the first external protocol.

A modem may be provided for extracting the external protocol commands and for modulating the external protocol commands.

The media streams may be in analog form or in digital form. Preferably, the interface between the main unit and the plug-in unit consists of a slow speed digital channel, an analog channel, and a UART channel.

Preferably, the plug-in module is adapted to implement a functional model of each external interface, and a translation between these functional models.

Advantageously, a single main unit can be designed once and then manufactured in volume in a very efficient manner. When it is desired to use the main unit in a system which uses a particular external protocol, for example H.323., an appropriate plug-in module is installed to handle the translation between the external protocol and the main unit. Where previously proxy servers and the like had been required to perform such a translation, now a single plug-in module installed on a particular user's main unit can allow that user to be accommodated without the requirement for a proxy server.

Advantageously, the cost of the plug-in modules may be passed on to the users, while eliminating the cost of the proxy servers. It is possible to have improved network security by eliminating the proxy server from the loop. Furthermore, it may be possible to deliver a better quality of service using the plug-in modules than proxy servers since messaging is processed locally without the necessary network delays introduced in the proxy server approach. The plug-in modules are very easy to install, preferably not requiring the assistance of a technician.

Particular embodiments include plug-in modules adapted for the H.323 protocol, P-phone protocol as a line card and/or set, POTS protocol as a line card and/or a set.

Additional plug-in modules comprise modules for each of ISDN, Nortel TCM, SIP, xDSL, Blue Tooth wireless, CT2 + wireless, Universal Serial Bus (USB), RS-232, POTS with V.90 modem, IrDA, MGCP, MEGACO (megacop), and H.248. It is to be understood that the scope of the invention includes plug-in modules for each of the specific examples, but also" includes plug-in modules for other protocols/applications not listed but which would benefit from the solutions taught.

### Brief Description of the Drawings

Preferred embodiments of the invention will now be described with reference to the attached drawings in which:
Figure 1 is a block diagram of a conventional arrangement in which a telephony system is setup to provide H.323 connectivity to an internet telephone;
Figure 2A is a functional block diagram of a telephone featuring a plug-in module according to an embodiment of the invention;
Figure 2B is a schematic of a main unit with a plug-in module installed showing the connectivities possible;
Figure 3 is a functional block diagram of the main unit portion of the telephone at Figure 2A;
Figure 4A is a more detailed block diagram of the main unit of Figure 3;
Figure 4B is an example pinout diagram for the ACM I/F of Figure 2A;
Figure 4C shows example signals carried over the SIDL channel.
Figure 5A is a block diagram of a telephony system setup to provide H.323 connectivity to the telephone of Figure 2A equipped with an H.323 plug-in module;
Figure 5B is a block diagram of the H.323 plug-in module of Figure 5A;
Figure 6A is a block diagram of a telephony system setup to provide P-phone line card connectivity to the telephone of Figure 2A equipped with a P-phone line card plug-in module;
Figure 6B is a block diagram of the P-phone line card plug-in module of Figure 6A;
Figure 7A is a block diagram of a telephony system setup to provide POTS line card connectivity to the telephone of Figure 2A equipped with a POTS line card plug-in module;
Figure 7B is a block diagram of the POTS line card plug-in module of Figure 7A;
Figure 8A is a block diagram of a telephony system in which the telephone of Figure 2A is equipped with a P-phone set plug-in module;
Figure 8B is a block diagram of the P-phone set plug-in module of Figure 8A;
Figure 9A is a block diagram of a telephony system in which the telephone of Figure 2A is equipped with a POTS set plug-in module; and
Figure 9B is a block diagram of the POTS set plug-in module of Figure 9A.

### Detailed Description of the Preferred Embodiments

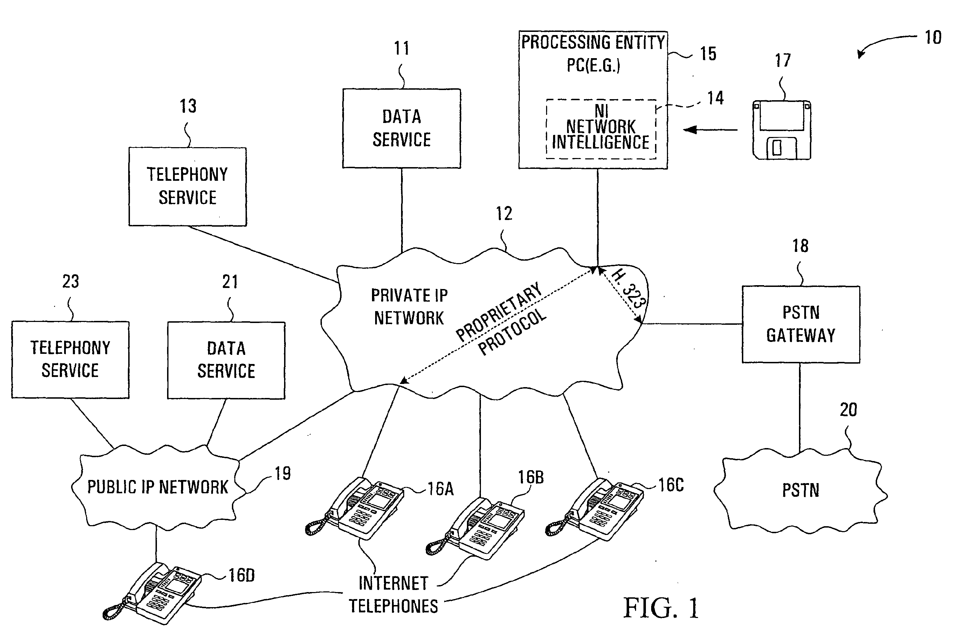

Referring to Figure 1, a telephony system 10 described in copending U.S. application No. 09/307356 by Allan et al. filed May 7, 1999 (assigned to the same assignee as this application) and hereby incorporated by reference comprises a private IP network 12 connected to an NI (network intelligence) 14, ITs (internet telephones) 16A, 16B, 16C, a data service 11, a telephony service 13, a public switched telephone network (PSTN) gateway 18, and a public IP network 19. PSTN gateway 18 connects to a PSTN 20. The public IP network 19 may include an IT 16D, a data service 21 and a telephony service 23. The private IP network 12 could be in the nature of a local area network (LAN), such as an Ethernet, or a wide area network (WAN). The public IP network 19 could be the public Internet. The NI 14 is software which executes on a processing entity 15 typically consisting of a central processing unit, memory and a network interface. The processing entity 15 may be a personal computer (PC), network server, or other general computer resource which may or may not be dedicated to running the NI 14. The processing entity 15 may be loaded with the NI 14 from any computer readable medium, such as disk 17, a tape, or a memory chip. Also, the NI 14 may be down loaded from a remote source on the private or public IP network 19,20. The processing entity 15 may be a dedicated processor, memory, and network interface into which the NI 14 is embedded.

The ITs 16A,16B,16C react to events generated by a user (e.g., key presses, hook switch transitions) and report these to the NI 14 by sending IP messages over the private IP network 12 in accordance with a local protocol. The IP messages are transported using the IP protocol suite (specifically, messages are transported over a reliable user datagram protocol -- UDP --layer). The NI 14, which implements the functional model of the ITs 16A,16B,16C, reacts to these events and controls the function of the ITs (user interface, visual/audio feedback, audio hardware control etc.) by sending elemental control messages to the ITs. Using this approach, the IT software design can be static but the functional model of the IT may change, as new features and services become available, by simply changing the functional IT emulator software in the NI 14. This removes design complexity in the ITs 16A,16B,16C. Because the ITs 16A,16B,16C do not execute industry evolving functional protocol stacks locally (e.g. H.323), they do not become obsolete as new versions of the protocols evolve. All evolving protocol dependant software is maintained in the NI 14 where software updates are handled easily. In this model, the NI 14 acts as a proxy agent for the ITs 16A,16B,16C by converting messages received from the ITs to appropriate standard protocol.

All of the keys of the ITs 16A,16B,16C are "soft keys", that is, the keys can be assigned a function within the NI 14. This facilitates the provision of, along with telephony services, services not usually associated with a telephony device, such as access to live or archival audio programming available over the IP network, stock quotation updates, and web browsing. In the illustrated example, it is assumed that a H.323 connection is to be established to IT 16A. In coordinating this, a local protocol taught in the above-referenced copending application is used to communicate with the processing entity 15, and more particularly with the particular network intelligence 14 which handles H.323. The processing entity 15 then acts as a proxy server, translating signaling from/to the IT 16A to H.323 for transmission to/from the PSTN gateway 18 for example.

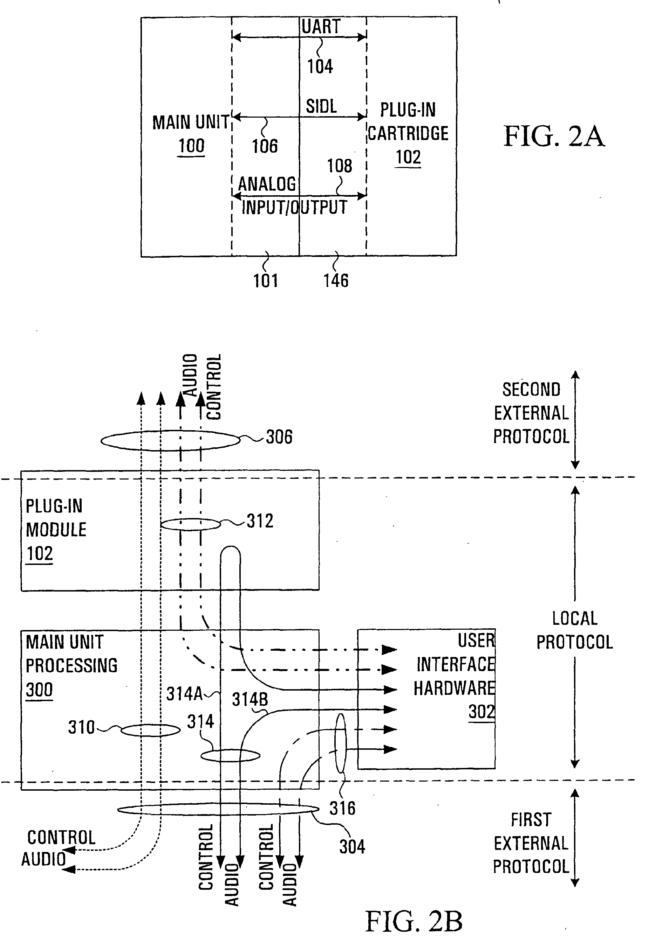

Embodiments of the invention provide a telephone set comprising a main unit and a number of different plug-in modules which support many features ordinarily found only in specialized set designs and more particularly which mitigate the need for the processing entity 15 and network intelligence 14 of the above example. This design provides flexibility for the end user and minimizes manufacturing costs while offering a dynamically scaleable phone set design. Referring to Figure 2A, the phone set comprises a main unit 100 with an ACM I/F (interface) 101 for receiving plug-in accessory modules 102 having matching ACM (accessory module) I/F 146 (one shown plugged into the main unit 100). The ACM interfaces 101,146 provide an interface between the main unit 100 and the accessory module 102 through a serial UART channel 104, a SIDL (slow inter-chip digital link) channel 106, and an analog input/output channel 108.

Figure 2B is a simplified block diagram showing the types of connectivity possible using the arrangement of Figure 2A. Shown as a single block 300 is the main unit's processing capabilities. The main unit's user interface hardware is indicated at 302. The plug-in module is again indicated by 102. The main unit may have a connection indicated by 304 to a network. Furthermore, the plug-in module may have an external connection 306 which may be connected to a set of some sort, or may be connected to another network. It is assumed that communications with the network through network connection 304 are done using a first external protocol. Communications between the main unit 300, the plug-in module 102 and the user interface hardware 302 are done in a protocol local to the main unit. Communications through the plug-in module's external connection 306 are in a second external protocol. Depending upon whether the plug-in module's external connection 306 exists and/or whether the network connection 302 exists, there are a number of different control and stream paths which can be established. A control path refers to the path taken by control messages. A stream path refers to a path taken by a media flow, such as an audio channel.

Lines 310 represent a first type of connectivity in which both media stream and control paths are established between the network connection 304 and through the plug-in module 102 to the plug-in module's external connection 306. If plug-in module 102 has set line card capabilities, then some sort of set would be connected to the external connection 306, for example a POTS or P-phone. If plug-in module 102 has set capabilities, then some sort of line card would be connected to external connection 306, for example a POTS line card in a PSTN. For this type of connectivity, the plug-in module 102 translates the first external protocol to and from the second external protocol.

Lines 312 represent a second type of connectivity in which both a media stream and control path are established between the plug-in module 102 and main unit's user interface hardware 302. If plug-in module 102 has set capabilities, then some sort of line card would be connected to external connection 306, for example a POTS line card in a PSTN. For this type of connectivity, the plug-in module 102 translates the second external protocol to and from the local protocol.

Lines 314 represent a third type of connectivity in which a control path 314A is established in sequence from the network connection 304, to the plug-in module 102 and back to the main unit from the plug-in module 102 and to the user interface hardware 302, and a media stream path 314B is established between the network connection 304 and the user interface hardware 302. For this type of connectivity, there need not be any plug-in module external connection 306. For this type of connectivity, the plug-in module 302 translates the first external protocol to and from the local protocol.

Lines 316 represent a fourth type of connectivity in which both a media stream and control path are established between the network connection 304 and the user interface hardware 302. This would assume that the communications through the network connection 304 use the first external protocol to encapsulate local protocol commands. This type of connectivity is the only type possible in the phone taught in the previously referenced U.S. patent application. The plug-in module 102 does not participate in this type of connectivity.

The main unit 100 is preferably designed to accommodate combinations of the four above-identified connectivity types, so long as only one connection is controlling the user interface hardware 302. Since the first type of connectivity 310 does not use the user interface hardware 302, it may exist simultaneously with any of the other connectivity types 312,314,316. Combining the first and second connectivity types 310,312 would require that the plug-in module external connection be capable of accommodating two connections. Combining the first 310 and either the third 314 or fourth 316 connectivity types would require that the network connection 304 be capable of accommodating two connections. This would be the case if external connection 304 is an Ethernet connection for example.

It is noted that copending applications 09/028519 to Dynie et al. filed February 23, 1998, 09/028520 to Brown et al. filed February 23, 1998, and 09/028512 to Johnson et al. filed February 23, 1998, all hereby incorporated by reference, describe a mechanical design for a telephone set with plug-in module capability.

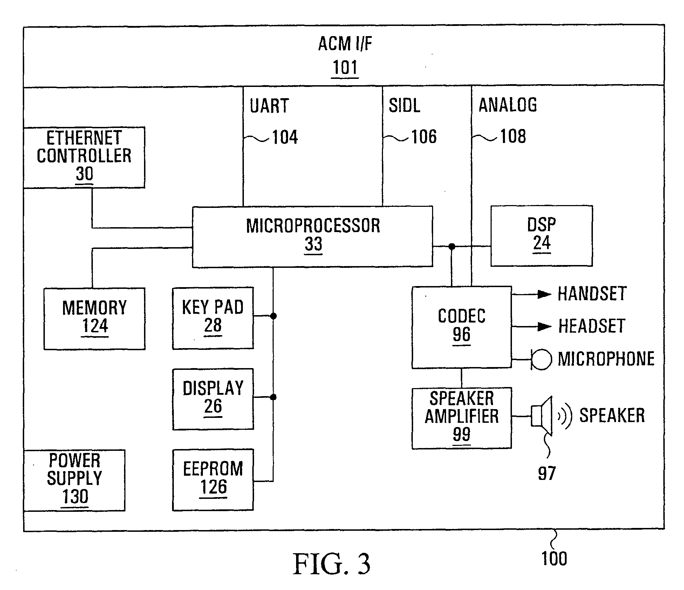

A block diagram of the main unit 100 hardware is shown in Figure 3. Shown is a microprocessor 33 connected to a DSP (digital signal processor) 24. The microprocessor 33 and the DSP 24 may be implemented as a single microprocessor or as two or more processors. The microprocessor 33 is connected to an Ethernet controller 30, to a memory 124, and through the UART channel 104 to the ACM I/F 101. The microprocessor 33 is also connected to interact with the main units user interface hardware, for example consisting of a keypad 28 on the main unit 100, to control an LCD display 26 (for displaying text for example), and to control the contents of an EEPROM 126. The microprocessor 33 is connected to the SIDL channel 106 to the ACM I/F 101. The microprocessor 33 and DSP 24 are connected in sequence to a codec 96 and speaker amplifier 99. The codec 96 has interfaces to the handset (not shown), headset (not shown), and microphone (not shown), while the speaker amplifier 99 has an interface to the speaker 97. The codec 96 is also connected to the analog input/output channel 108 in the ACM I/F 101. The various blocks will now be briefly described.

The Ethernet controller 30 provides the electrical Ethernet interface for 10/100 base-T operation. While the external connection for the main unit 100 is Ethernet for this example, it is to be understood that connection operating with some other external protocol could alternatively be provided.

The DSP 24 supports audio coding/decoding to support the various Internet audio standards and to enhance audio quality.

The speaker amplifier 99 provides some voltage regulation and a speaker driver for a handsfree feature.

The codec 96 is a codec for the handset, headset, handsfree, audio functions. The codec 96 supports a digital interface called Inter-chip Digital Link (IDL) for transferring digitized audio to the DSP 24. IDL is also converted to a slower speed known as Slow IDL (SIDL). SIDL is used at the ACM I/F 101 on SIDL channel 106 rather than IDL to help meet regulatory emissions requirements.

The microprocessor 33 scans the keys 28 and updates the Liquid Crystal Display (LCD) 26. The microprocessor 33 also controls the audio parameters used in the codec 96 and controls (through the codec) which audio paths are active.

The microprocessor 33 is ultimately responsible for control of the main unit 100. It provides the Ethernet protocol support, downloads the DSP 24 with audio algorithms through an Ethernet connection to the Ethernet controller 30 or from the plug-in module, manages the user interface hardware, maintains sanity, and downloads new code to the memories.

Memory is preferably provided in the form of non-volatile FLASH memory and Static Random Access Memory (SRAM) 124. This could also include Electrically Erasable Programmable Memory (EEPROM) 126, Dynamic Random Access Memory (DRAM), or other types of memory elements. All these types of memories can be used for program store or data store. These memories may be lumped together, but preferably the memory is non-volatile in the sense that when power is removed, operational code and essential parameters are preserved.

The display 26 can be of any X/Y dimension, black/white/gray-scale or color. The display 26 provides visual indication/feedback to the user. Other display types could also be used.

The keypad 28 is preferably arranged in a familiar 'phone' set pattern. Additional keys are used for 'soft' functions and rapid access features.

A power supply 130 provides regulated voltage(s) to power the main unit 100. Its input can be either alternating current (AC) or direct current (DC). Depending on plug-in module current requirements, it can also be used to optionally power the plug-in module.

The ACM I/F 101 provides the electrical/physical interface for the plug-in module. UART commands can be sent/received through the UART channel 104 to control the main unit's functionality. The SIDL channel 106 provides an alternate digital interface for both narrow-band and wide-band audio. An analog audio interface is also supported the using analog input/output channel 108.

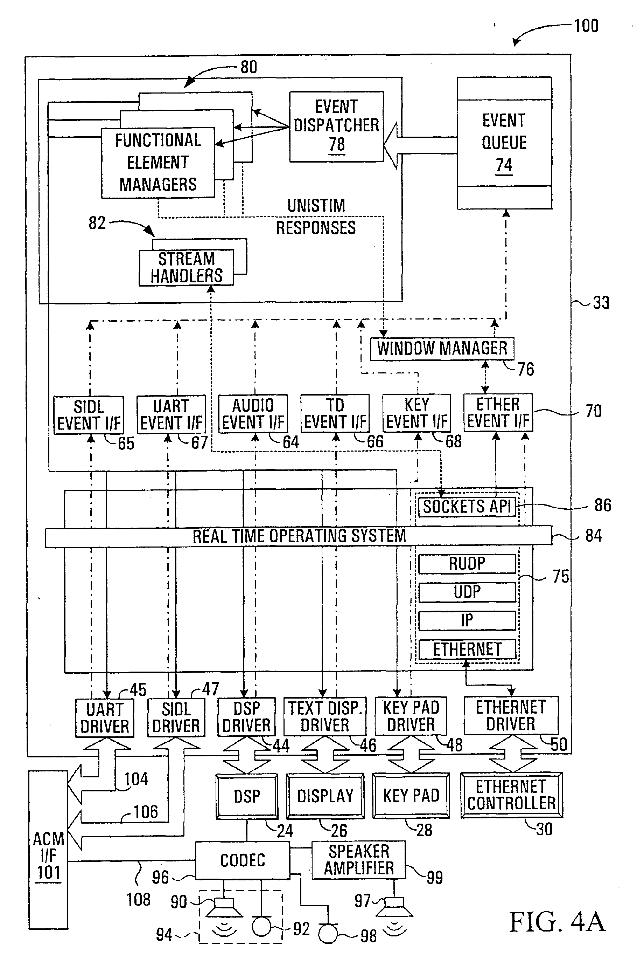

A more detailed architecture of the main unit 100 is shown in Figure 4A where the detailed functions of the microprocessor 33 have been expanded. Objects appearing in figure 3 will not be introduced again.

The microprocessor 33 interfaces with the UART channel 104, the SIDL channel 106, the DSP 24, the display 26, the keypad 28 and the Ethernet controller 30 through device drivers 45,47,44,46,48, and 50, respectively. An event originating at any of these devices passes to a respective software event interface 65,67,64,66,68, and 70 for the respective device. The processor 33 may also establish a connection between the Ethernet controller 30 and any of the other devices through an IP protocol stack 75. An event queue 74 receives inputs from the event interfaces 65,67,64,66,68 and from a window manager 76 and outputs to an event dispatcher 78. The event dispatcher 78 outputs to functional element managers 80 and any associated stream handlers 82 created by the functional element managers 80. The stream handlers 82 of the functional element managers 80 are interconnected with the IP protocol stack 75 and they, through their functional element managers 80, output to the device drivers 45,47,44,46 and 48. The functional element managers 80 also output to the window manager 76. Communication with the device drivers 45,47,44,46 and 48 is through a real time operating system (RTOS) 84. The RTOS maintains the IP protocol stack 75 as well as software sockets 86 in the stack.

Each functional element manager 80 is designed to control a particular hardware device, group of hardware devices, or a specific set of book keeping tasks. These managers interact with the plug-in module 102 via local protocol messages to provide a control entry point to the main unit 100. Preferably, they also can interact with an external NI (network intelligence) in a manner described in the above-referenced Application No. 09/307356. The functional element managers 80 provide two major capabilities:
1. They are responsible for parsing incoming local protocol messages from the plug-in module 102 and translating these low level commands directed to specific hardware devices within the main unit 100. The functional element managers 80 control each of the hardware devices 24,26 and 28, other than the Ethernet controller 30, via its corresponding device driver 44,46 and 48.
2. They are responsible for monitoring internally generated events (keypad presses, software timeouts) and reformatting these into local protocol messages, which are then sent to the plug-in module 102 for processing again through UART interface 104.

The specific functional element managers are preferably as follows: plug-in module manager; broadcast manager; network manager; basic manager; key/indicator manager; audio manager; and display manager. The broadcast manager is used to broadcast commands to all of the hardware devices of the main unit 100. The network manager provides terminal initialization, network maintenance and encryption. The basic manager provides an interface to query the status and operating parameters of the main unit 100 (e.g., the main unit 100 may query a hardware identifier). The key/indicator manager is responsible for managing all of the keys, indicators and associated commands within the main unit 100. Key press events, hook switch events, key/indicator status, icon states and LED cadencing are all governed by this manager. The audio manager is responsible for all aspects of the audio including path setup, audio stream setup, and path maintenance. The display manager controls the display of the main unit 100. The plug-in module manager is responsible for managing the interaction with the plug-in module.

The functional element managers 80 sit on top of the RTOS 84, which provides the hardware abstraction layer. In particular, the RTOS 84 provides priority based scheduling of system tasks; consistent application programming interfaces (APIs) for low level driver abstraction; inter-task communications primitives and data memory management control; and a tightly integrated transport control protocol/internet protocol (TCP/IP) stack, through which the Ethernet driver 50 is controlled. While not preferred, optionally, the RTOS 84 may be replaced by a simple task manager. In such cases, the functional element managers 80 would require greater sophistication in order to handle the different APIs of the various device drivers.

Below the RTOS 84 sits the device drivers 49,47,44,46,48 and 50. If a piece of hardware changes, only the device driver for that hardware and the respective event interface will need to change. Hardware can therefore be added or removed without impacting the rest of the software. The drivers are generally designed to be aware of two types of data --control and media streams -- and provide a separate API for each.

All drivers except the Ethernet driver 50 are controlled by the functional element managers 80. The Ethernet driver 50 is controlled by the RTOS 84 through the IP protocol stack 75. All functional element manager communication with the Ethernet driver 50 is therefore done indirectly by opening a socket 86 at one of the IP protocol layers 75 (e.g., a simple IP socket or a datagram-based UDP socket). Data from the functional element managers 80 destined for the Ethernet controller 30 thus passes through an opened socket, down the IP protocol stack 75 to the Ethernet driver 50; conversely, the Ethernet driver 50 passes received data to the IP stack 75, up to the socket API layer 86 such that the functional element manager 80 that had opened the socket will receive the data.

There is only one event queue 74 and all internal and external events are placed in that event queue. This ensures that all events acted upon by the main unit 100 will be processed based on order of arrival. Media streams, on the other hand, bypass the event queue 74. The window manager 76 intercepts all incoming local protocol messages. The purpose of the window manager is to allow the main unit 100 to be responsive to commands from the plug-in module 102, and preferably at the same time to commands from one or more external sources which may include one or more external network intelligence devices (NIs). However, at any point in time, only one source's commands (either the plug-in module an external source) are directed to the user interface hardware resources of the main unit 100. While the plug-in module or a particular external source is controlling the main terminal user interface hardware, it has complete control of the user interface hardware.

As the user switches from external source 'A' to the plug-in module, external source 'A' no longer has control of the main unit's user interface hardware and should be informed of this condition. The main unit 100 uses the "Suspend Connection with Server" command from the local protocol for this purpose. Similarly, the main unit 100 may use "Resume Connection with Server" message to 'start' or 'resume' the session with the plug-in module. The plug-in module uses this message as a signal to refresh the display and other hardware components as required.

As stated above, only one of the plug-in module 102 or an external source has access to the main unit's user interface hardware at a given time. There may be situations, however, when it is necessary for one of the "suspended" external sources to inform the main unit 100 of a special event. An example would be the reception of an incoming call on a suspended server. To allow the disconnected external source to inform the main unit 100, and hence the user, of an important event, thereby allowing the user to decide how to handle the event, the local protocol provides the "Server Alarm" message. The "Server Alarm" message allows a disconnected NI to signal an event and a text string to the main unit 100. The main unit 100 decodes the event, and informs the user of the pending event. The user may then decide to accept or reject the event. Upon reception of the event, the main unit 100 would suspend the current (or plug-in module) and switch to the new external source via "Suspend Connection with Server" and "Resume Connection with Server" messages as described above. If the user elects to reject the event, then the terminal sends a "Resume Connection with Server" message to the current external source.

Because the main unit 100 does not execute industry evolving functional protocol stacks (e.g. H.323), the main unit 100 does not become obsolete as new versions of the protocols evolve. All evolving protocol dependant software preferably is maintained in the plug-in module 102 where software updates are handled easily. In the event an external source is a network intelligence it may have evolving protocol capabilities as well for some embodiments. In this model, the plug-in module 102 acts as a proxy agent for the main unit 100 by converting messages received from the main unit 100 to an appropriate standard protocol.

Typically a separate plug-in module is required for each different service.

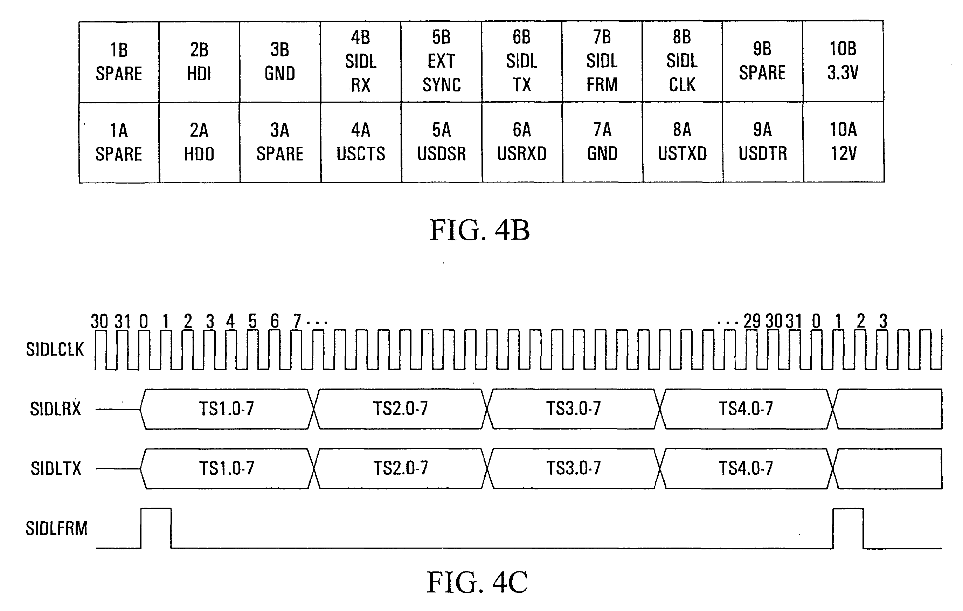

The ACM I/F may be realized for example with a 20 pin PCB edge connected arrangement. A preferred pin out diagram for such an arrangement is shown in Figure 4B with the pins being numbered 1A to 10A, and 1B to 10B. The following table summarizes the preferred connections available to the module through the ACM I/F:

| Pin Number | Signal | Type | Description |
|---|---|---|---|
| 1B | SPARE | | |
| 2B | HDI | A | Analog input |
| 4B | SIDLRX | I | Slow Interchip Digital Link Receive |
| 5B | EXTSYNC | I | External 8 kHz Synchronization signal to CODEC |
| 6B | SIDLTX | O | Slow Interchip Digital Link Transmit |
| 7B | SIDLFRM | O | Slow Interchip Digital Link Frame |
| 8B | SIDLCLK | O | Slow Interchip Digital Link Clock |
| 9B | SPARE | P | |
| 10B | +3.3V | P | +3.3V from the terminal |
| 1A | SPARE | | |
| 2A | HDO | A | Analog output |
| 3A | SPARE | P | |
| 4A | USCTS | O | USART Clear to Send |
| 5A | USDSR | O | USART Data Set Ready |
| 6A | USRXD | O | USART data output |
| 8A | USTXD | I | USART data input |
| 9A | USDTR | I | USART Data Terminal Ready |
| 10A | LOOP_PWR | P | 12V VDC Power feed from accessory to terminal (diode required on the accessory when feeding power). Also used by accessory to monitor loop power. |
| 3B,7A | GND | P | Ground |

Most embodiments described below in which the plug-in module uses a codec and the SIDL channel 106 require a codec to SIDL synchronizer circuit. The SIDL to Codec Synchronizer serves the purpose of converting one serial format to another serial format. One example implementation will be described. Typical codecs use an 8-bit time slot with a 2.56 MHz clock and Sync Frame pulse at 8 kHz. The main unit 100 presents an SIDL interface with four 8-bit time slots synchronized with a 256 kHz clock and a Sync Frame pulse at 8 kHz.

The SIDL interface is a 256 kbps synchronous bidirectional interface. The 256 bits are divided into four 8-bit time slots B1 - B4. These can be connected directly to either B channel on the main unit 100 IDL as well as any of the transducers within the set.

The SIDL interface is primarily intended to provide flexible and efficient access (minimum main unit 100 F/W overhead) to the main unit 100 IDL channels and the transducers within the main unit 100. This is accomplished by setting up the main unit 100 H/W to provide the connections through the main unit 100. Once set up by system commands to the main unit 100, there is no further need for intervention from either the system or the main unit 100 to maintain these channels.

The SIDL interface is comprised of four signals.
SIDLRX - Synchronous data into the main unit 100
SIDLTX - Synchronous data out of the main unit 100
SIDLCLK - Clock for synchronous data (256 kHz)
SIDLFRM - Frame pulse at 8 kHz rate

The SIDL interface signals are shown in Figure 4C.

The IDL output by the codec operates at a clock rate of 2.56 MHz. The transmission characteristic is defined in terms of 125 µs IDL frame each consisting of 32 equal time slots. Each time slot is equally divided into 10 bit-periods. One bit-period is exactly one CLOCK period or about 390 ns.

In general, the 10 serial bits (b0-b9) are segregated into two groups: b0-b7 as data channel known as B-Channel and b8-b9 as signaling channels (commonly referred to: b8 as D-channel and b9 as A- or M-channel). Thus, the B-Channel has a transmission rate of 64 kbps and the D-Channel or A- or M-Channel each has 8 kbps. Data transfer operations on the data and signaling channels may be independent to each other. They may be selectively active in any time slot subject to system configuration.

The time slot definition also is illustrated in Figure 4C. The signal, SYNC, is the frame synchronization pulse, its high to low transition marks the beginning of time slot 0. One new data bit is serially shifted at each positive transition of the CLOCK signal.

Embodiments of the invention will now be described with reference to versions of Figure 1 in which one of the internet telephones 16A has been replaced with a main unit 100 as described above with respect to Figure 2, and in which an appropriate plug-in module has been installed. As described previously, the main unit 100 expects to communicate in the local protocol. The purpose of the plug-in module in almost all cases is to eliminate the need for a proxy server such as processing entity 15 and network intelligence 14 to translate between the proprietary protocol and each external protocol. A separate plug-in module is provided for each of the following functions: H.323 interface; P-phone line card; POTS line card; P-phone set and POTS phone set. For each of these examples, a different version of Figure 1 will be described to illustrate the network connectivity, and then a block diagram of the particular plug-in module which allows this to be achieved will be described.

The main unit 100 is designed to allow diversion of the local protocol to the module 102. Preferably, it is also possible for the main unit 100 to share the memory located on the module 102. Also, if a processor is employed on the module, this processor can work to independently translate and pass on to the main unit 100 information to be sent out. The main unit 100 can be programmed by the module 102.
Enhancements may also be sent through communications with a server.

In some cases, the plug-in module 102 will retain the main unit's 100 physical Ethernet connection, and function to perform protocol translation. In another case, the module 102 provides additional memory and code to allow the main processor of the main unit 100 to do the translation with the assistance of the resources on the plug-in module 102. The main unit 100 has a standard configuration that is based on the local protocol. Modifications to the user interface can be programmed in the plug-in module 102 if needed or can be downloaded from a server.

In each case, the main unit 100 can divert or pass through either selected or "all" messages normally destined to/from the Ethernet controller 30 to/from the UART channel 104 to/from the plug-in module 102. This is done by configuring the plug-in module 102 to send a local protocol command to the main unit 100. More specifically, the main unit 100 is instructed using the local protocol to send local protocol commands to interface 104. If an existing local protocol is to be used, or if the local protocol taught in the above referenced application to Allan et al., then additional local protocol commands would be needed to be introduced to allow the plug-in module 102 to instruct the main unit 100 to divert local protocol commands to the plug-in module. This may allow some pre-filtering/processing to control which commands are to be diverted.

In each case, the SIDL interface 106 is for passing messages back and forth between the main unit 100 and the plug-in module 102. Preferably, in all cases these messages are encapsulated with the local protocol. Depending upon the particular plug-in module 102 under consideration, these messages may relate to a number of different functions. For example, these messages might be external protocol messages received at the main unit 100, encapsulated in the local protocol, and forwarded on to the plug-in unit 102. Similarly, they could be external protocol messages generated by the plug-in unit 102 encapsulated in the local protocol and forwarded on to the main unit 100. They could be local protocol messages generated internally by the main unit 100 which are sent to the plug-in unit for translation to an external protocol. They could be local messages generated by the plug-in module 102 as a result of a translation performed on a previously received external protocol message to be sent to control the main unit 100.

To modify the functionality of the main unit 100 through the use of a plug-in module 102, the module 102 is first installed in the back of the main unit 100. The main unit 100 is then configured in one or more of several methods including but not limited to:
1) through the keypad/LCD of the main unit 100 configuration menus provided by software run on the plug-in module 102 can be presented to the user;
2) the plug-in module 102 may already have a prestored configuration and this may be passed to the main unit 100 using the local protocol;
3) the configuration may be downloaded from an externally connected server;
4) the main unit 100 may be pre-configured at the factory; and
5) a PC program might be used to download configuration data to the phone.

For each module 102, a power supply is not shown as a functional block, but it is noted here that one would be needed, or power could be obtained from the main unit 100. Higher power modules in general should have their own power supply. If the module is a set module which is connectable to the PSTN (for example the POTS set card or the P-phone set card modules described in detail below), then it could steal at least a nominal amount of power from the tip/ring interface.

In some embodiments, the plug-in module 102 will take over the control of the user interface hardware on the main unit 100. This will occur for example with a P-phone set card or a POTS set card, each of which takes over the user interface hardware. This would not occur for example with a P-phone line card or a POTS line card in which the P-phone or POTS phone connected would have its own respective user interface hardware. In embodiments in which the user interface hardware of the main unit 100 is to be controlled, the plug-in module 102 will be provided with user interface drivers. These are programs which are individually aware of the physical attributes of the main unit's hardware for the purpose of interaction with a user. The user interface drivers include a keypad driver which is aware of which keys have been pressed and released. A keypad driver would for instance collect key presses for the purpose of gathering a dialed number. The keypad driver then sends this information to a higher layer of software for interpretation and action as necessary by the particular module. An LCD driver might be provided which knows where/how information can be stored for viewing on an LCD. An audio driver might be provided which is aware of the audio characteristics and controllable audio parameters.

### H.323 Module

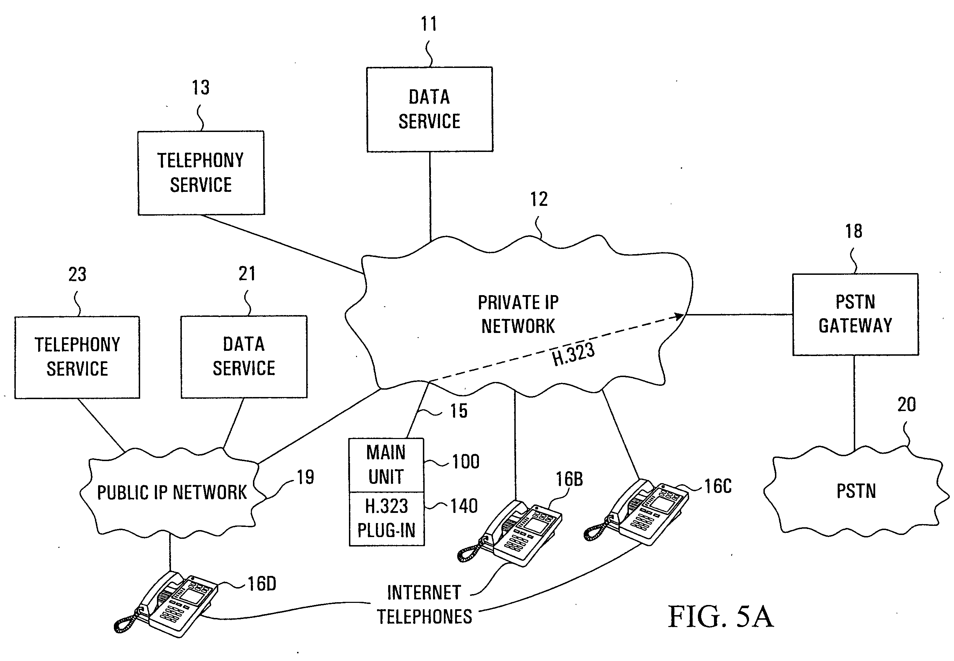

Referring now to Figure 5A, a first embodiment of the invention provides an H.323 plug-in module 140 shown plugged into a main unit 100 connected to the private IP network 12 through Ethernet connection 15. The H.323 plug-in module 140 performs the functions which were previously executed in the processing entity 15 and network intelligence 14 (see Figure 1) insofar as translation between the local protocol generated by the main unit 100 and the H.323 protocol is concerned. Thus, with the plug-in module 140 installed, the main unit 100 can communicate directly in H.323 for example to the PSTN gateway 18 or to any other entity on the network capable of being reached through an H.323 connection. Furthermore, while the main unit is shown connected to a private IP network 12, more generally it could be connected to any IP network. This is true of the remaining examples as well.

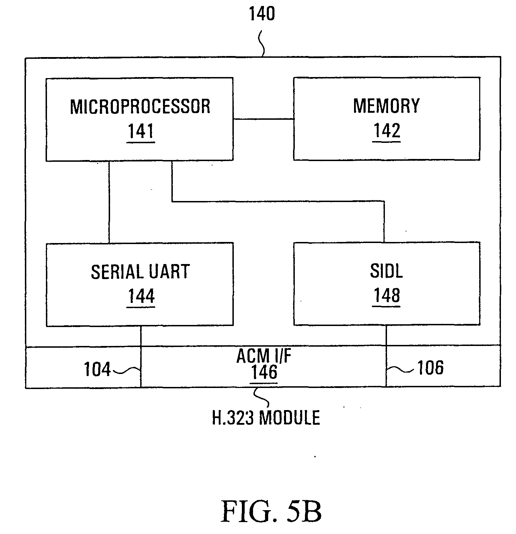

Referring now to Figure 5B, details of the H.323 plug-in module 140 will now be described. There is a microprocessor 141 with memory 142, and connected through a serial UART interface driver 144 to the module side ACM I/F 146, and optionally through a SIDL interface driver 148 to the module side ACM I/F 146. The microprocessor 141 contains a translation program capable of translating from/to the local protocol to/from H.323 and preferably contains all user interface software drivers for execution by microprocessor 141.

This module 140 effectively turns the main unit 100 into an H.323 phone. The module microprocessor 141 must translate several protocols to establish/maintain a voice connection between the IP network 12 and the main unit 100.
The IP network 12 uses H.323, and the main unit 100 uses the local protocol. The microprocessor 141 instructs the main unit 100 to pass IP messages to it thus giving the microprocessor 141 access to/from the IP network 12. All these messages are encapsulated with the local protocol.

When the main unit 100 makes a voice connection through the IP network 12, the module microprocessor 141 implements the call model for an H.323 IP phone (towards the IP network) and translates H.323 messages to meaningful local protocol messages towards the main unit 100 for control of audio/LCD/key press/etc. The microprocessor 141 makes the IP network 12 think it is talking to an H.323 IP phone. The microprocessor 141 controls the main unit 100 as a user interface device. This requires the microprocessor to not only translate between the protocols, but also follow the call states H.323 would present to the IP network 12. Preferably, IP packets for the audio stream per se are not forwarded to the plug-in module 140 but are processed by the main unit 100.

### P-phone Line Card Module

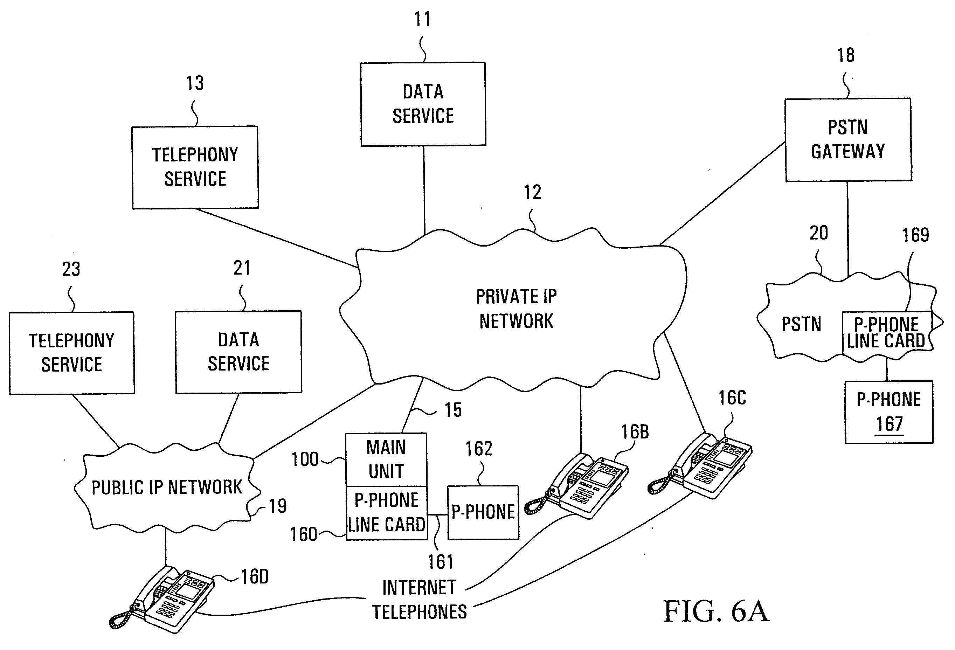

Referring now to Figure 6A, a second embodiment of the invention provides a P-phone line card plug-in module 160 shown plugged into a main unit 100 connected to the private IP network 12 through Ethernet connection 15. The "P-phone" is a type of main unit 100 which uses an above band 8 kHz tone pulsed at 1 kHz to transmit call information rather than the DTMF tones used by CLASS main unit 100s. This accessory is used to provide an interface with a P-phone phone set 162 at the end of the tip/ring loop connection 161. Existing P-phones can be supported with features similar to those offered by Centrex Services. For the purpose of context, a conventional P-phone 167 is shown plugged into a conventional P-phone line card 169 in a switch (not shown) within the PSTN 20.

An important aspect of this module 160, is its ability to act as a gateway to the P-phone phone set 162. The main unit 100 can have its own audio channel independent of the audio from the P-phone 162. Hence, two conversations can be carried over the Ethernet connection 15 at the same time. The plug-in module 160 can be also modified to support more than one P-phone 162.

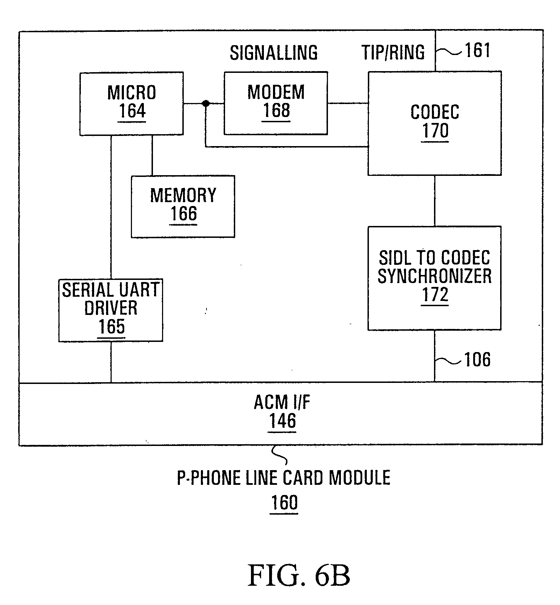

Referring now to Figure 6B, details of the P-phone line card plug-in module 160 will now be described. There is a microprocessor 164 with memory 166, and connected through a serial UART interface driver 165 to the ACM I/F 146. The microprocessor 164 is connected both through a modem 168 and directly to a codec 170 which is in turn connected through a SIDL to codec synchronizer 172 to the ACM I/F 146. The codec 170 has a tip/ring interface 161 to which the P-phone 162 is to be connected.

The audio to/from the P-phone 162 on this module 160 can be handled in several ways. In the illustrated approach, analog signals received through the tip/ring interface 161 are digitized on the module 160 using the codec 170 and then sent through the SIDL to codec synchronizer circuit 172 to interface with SIDL in a digital format through the SIDL channel 106.

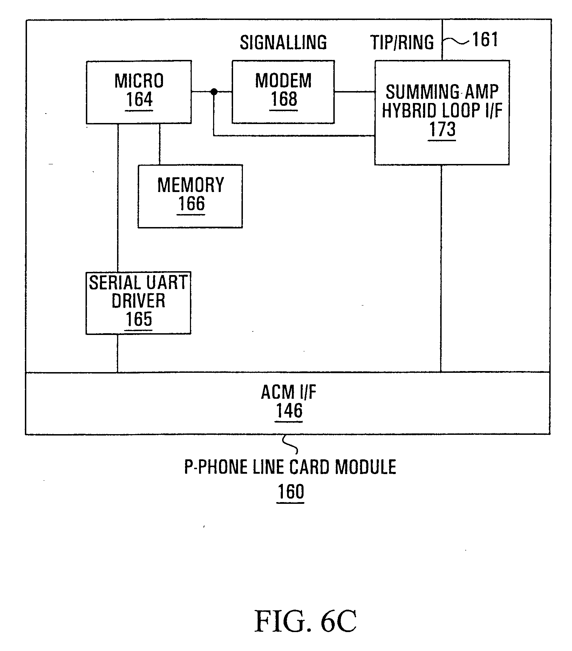

Figure 6C shows a P-phone line card plug-in module in which the audio to/from the P-phone is handled in a different way. This circuit differs from that of Figure 6B in that there is no SIDL to codec synchronizer circuit 172, and the codec 170 is replaced with a summing amp/hybrid loop interface 173. In this case, analog signals received by the summing amp/hybrid loop interface 173 through the tip/ring interface 161 are carried directly to the codec 96 in the main unit 100 using the analog input/output channel 108. The codec 96 would then digitize the analog signals, and pass them to the DSP 24 for Ethernet coding/decoding. Further, the DSP 24 can enhance the audio quality by performing various DSP filter algorithms.

In either case, the modem 168 is used to modulate/demodulate the P-phone signaling channel and pass this information to the microprocessor 164. The microprocessor 164 can further process this information before passing it to the main units microprocessor 33. The modem 168 is also used to pass information to the P-phone phone set 162.

The module microprocessor 164 is responsible for operating the P-phone signaling model. These duties include among others, monitoring for carrier, signal collision detection, message errors, formatting of the P-phone protocol etc.

The module 160 turns the main unit 100 into a gateway for a P-phone. The module microprocessor 164 must emulate the PSTN central office call model for a P-phone and send messages to the P-phone to control the user interface of the P-phone 162. This includes control of audio tones, LCD updates, interpreting key presses. The module microprocessor 164 must translate several protocols to establish/maintain a voice connection between the IP network 12 and the P-phone 162. The P-phone uses the P-phone messaging protocol, the IP network uses H.323, and the main unit 100 uses the local protocol. The microprocessor 164 instructs the main unit 100 to pass IP messages to it thus giving the microprocessor access to/from the IP network 12. All these messages are encapsulated with the local protocol.

When the P-phone 162 makes a voice connection through the IP network 12, the module microprocessor 164 implements the call model for an H.323 IP phone (towards the IP network) and a software call model of a P-phone line card (towards the P-phone). The microprocessor 164 makes the IP network 12 think it is talking to an H.323 IP phone. The microprocessor 164 makes the P-phone think it is talking to a P-phone line card. This requires the microprocessor 164 to not only translate between the protocols, but also follow the call states that each type of phone would present to their respective networks. The main unit 100 is able to place a voice call to the attached P-phone 162 via the IP network 12. The main unit 100 could also establish a voice call to the attached P-phone 162 where the module 160 could support a local voice connection (not going through the IP network). This would only involve a local protocol to P-phone protocol translation (H.323 would not be involved).

When the main unit 100 makes calls through the IP network 12, the module 100 can act as a P-phone gateway for a different IP network call. This allows two voice connections over Ethernet connection 15 at the same time one of which is terminated at the main unit 100, the other of which is terminated at the attached P-phone 162.

In one instance, the plug-in module 160 may have all the code to drive the P-phone set 162. However, a main support system (centrex IP for example) should be made aware either by a special code or by installation procedure updates on the servers that this feature is enabled. In a second instance, the P-phone line card 160 and P-phone 162 attached thereto may be driven entirely from the main unit 100 and not need to get support from a main system server.

### POTS Line Card Module

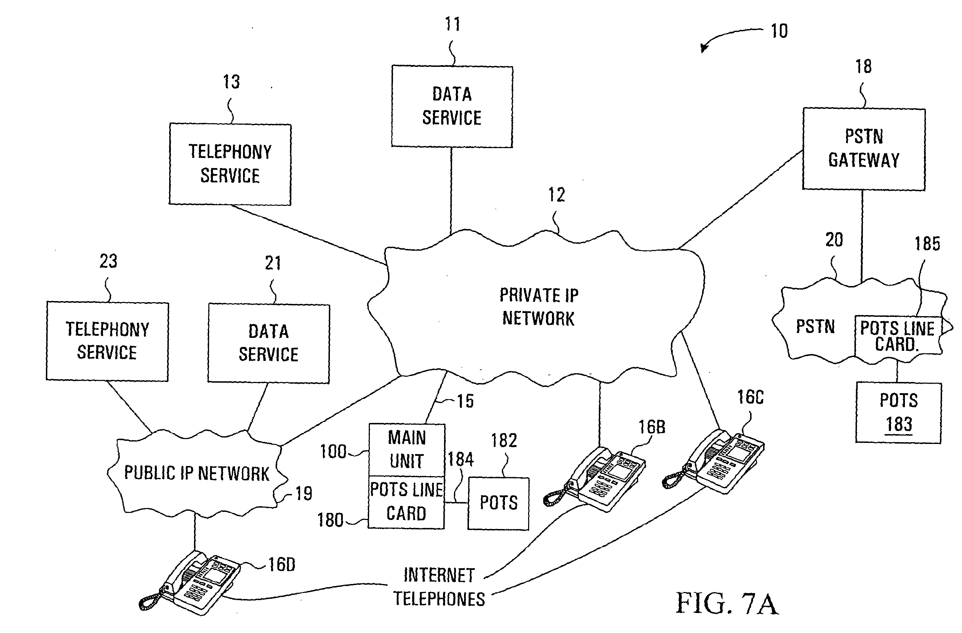

Referring now to Figure 7A, a third embodiment of the invention provides a POTS (plain old telephone set) line card plug-in module 180 shown plugged into a main unit 100 connected to the private IP network 12 through Ethernet connection 15. This module 180 is used to interface with a POTS 182 at the end of the tip/ring loop interface 184. Existing POTS phones can be supported with features similar to those offered by the Central Office. For the purpose of context, a conventional POTS 183 is shown connected to a conventional POTS line card 185 in the PSTN 20.

An important aspect of this module 180, is its ability to act as a gateway to the POTS phone set 182. The main unit 100 can have an audio source running simultaneous with audio from the POTS set 182. Hence, two independent conversations can be carried over the Ethernet connection 15 at the same time. The plug-in module 180 can be adapted to support more than one POTS device 182.

Another important aspect of this configuration is its ability to communicate with the following devices:
1. Fax machines
2. PC Modems
3. Answering machines
4. Extension phone sets

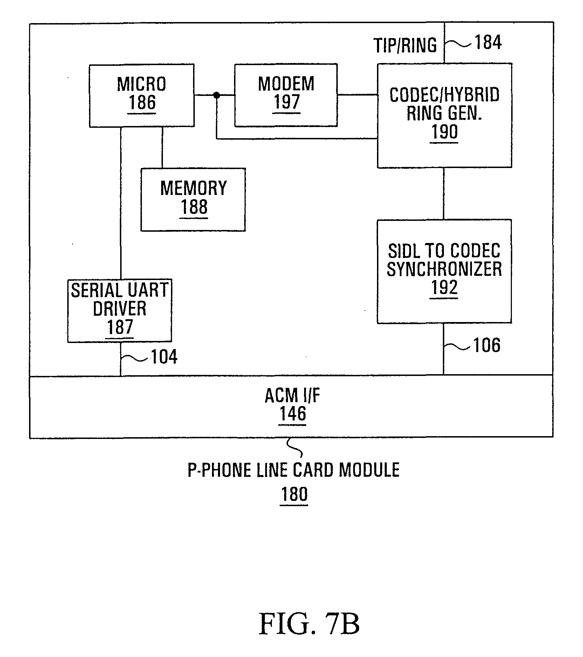

Referring now to Figure 7B, details of the POTS line card plug-in module 182 will now be described. There is a microprocessor 186 with memory 188, and connected through a serial UART interface driver 187 to the ACM I/F 146. The microprocessor 186 is connected to a codec/hybrid ring generator 190 which is connected to a tip/ring interface 184 to which the POTS 182 can be attached. The function of the codec/hybrid ring generator 190 is to represent the components required to support an analog main unit 100. This looks very much like a line card with the addition of a high voltage 20 Hz ring generator. Block 190 is also connected through a SIDL to codec synchronizer 192 to the SIDL channel 106. The microprocessor 186 is connected both through a modem 197 and directly to the codec/hybrid ring generator 190.

The audio to/from the POTS 182 on this module 180 can be handled in several ways. In the illustrated approach, analog signals received through the tip/ring interface 184 are digitized on the module 180 using the codec/hybrid ring generator 190 and then sent through the SIDL to codec synchronizer circuit 192 to interface with SIDL in a digital format through the SIDL channel 106.

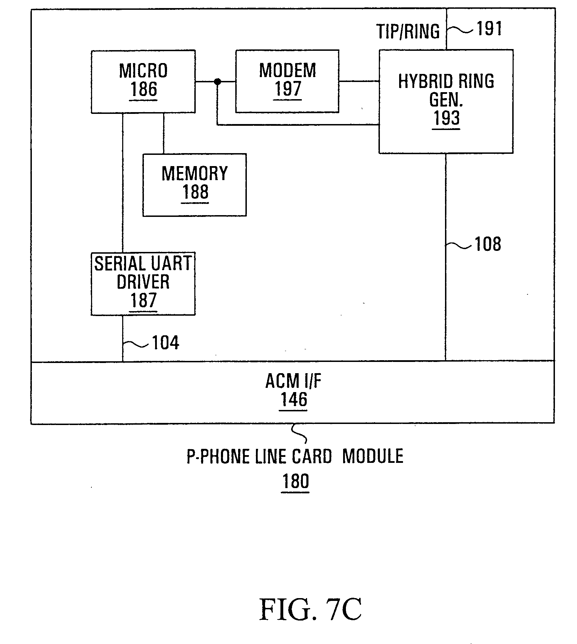

Figure 7C shows a POTS-phone line card plug-in module in which the audio to/from the POTS phone is handled in a different way. This circuit differs from that of Figure 7B in that there is no SIDL to codec synchronizer circuit 192, and the codec/hybrid ring generator 190 is replaced with a hybrid ring generator 193. In this case, analog signals received by the hybrid ring generator 193 through the tip/ring interface 191 are carried directly to the codec 96 in the main unit 100 using the analog input/output channel 108. The codec 96 would then digitize the analog signals, and pass them to the DSP 24 for Ethernet coding/decoding. Further, the DSP 24 can enhance the audio quality by performing various DSP filter algorithms.

In both cases, the modem 197 is used to modulate the CLASS signaling channel to support Caller ID to the POTS phone set 182. The microprocessor 186 can process this information or, the CLASS signaling could be performed by the DSP 24 in the main unit 100.

The module microprocessor 186 is responsible for monitoring the tip/ring interface 191 for detection of loop current, controlling the application of tones to the tip/ring, control of the Ring Generator (on/off duty cycle), collection of DTMF digits, formatting and sending of CLASS type messaging etc.

When the main unit 100 is connected to the Ethernet connection 15 and to a POTS phone 182 via module 180, the module turns the main unit 100 into a gateway for the POTS phone 180. The module microprocessor 186 emulates the PSTN central office call model for the POTS phone 182 and sends POTS signaling to the POTS phone 182 to control the user interface of the POTS phone.

The module microprocessor 186 must translate several protocols to establish/maintain a voice connection between the IP network 12 and the POTS phone 182. The POTS phone 182 uses central office signaling, the IP network uses H.323, and the main unit uses 100 the local protocol. The microprocessor 186 instructs the main unit 100 to pass IP messages to it thus giving the microprocessor access to/from the IP network 12.
All these messages are encapsulated with the local protocol.

When the POTS phone 182 makes a voice connection through the IP network 12, the module microprocessor 186 implements the call model for an H.323 IP phone (towards the IP network) and a software call model of a POTS line card (towards the POTS phone). The microprocessor 186 makes the IP network 12 think it is talking to an H.323 IP phone. The microprocessor 186 makes the POTS phone 182 think it is talking to a POTS line card. This requires the microprocessor 186 to not only translate between the protocols, but also follow the call states that each type of phone would present to their respective networks.

The main unit 100 is able to place a voice call to the attached POTS phone 182 via the IP network 12. The main unit 100 could also establish a voice call to the attached POTS phone 182 where the module 180 could support a local voice connection (not going through the IP network). This would only involve local protocol to POTS line card messaging translation (H.323 would not be involved).

When the main unit 100 makes calls through the IP network 12, the module 180 can simultaneously act as a POTS gateway for a different IP network call. This allows two voice connections over Ethernet connection 15 at the same time one of which is terminated at the main unit 100, the other of which is terminated at the POTS phone 182.

### P-phone Set Card Accessory

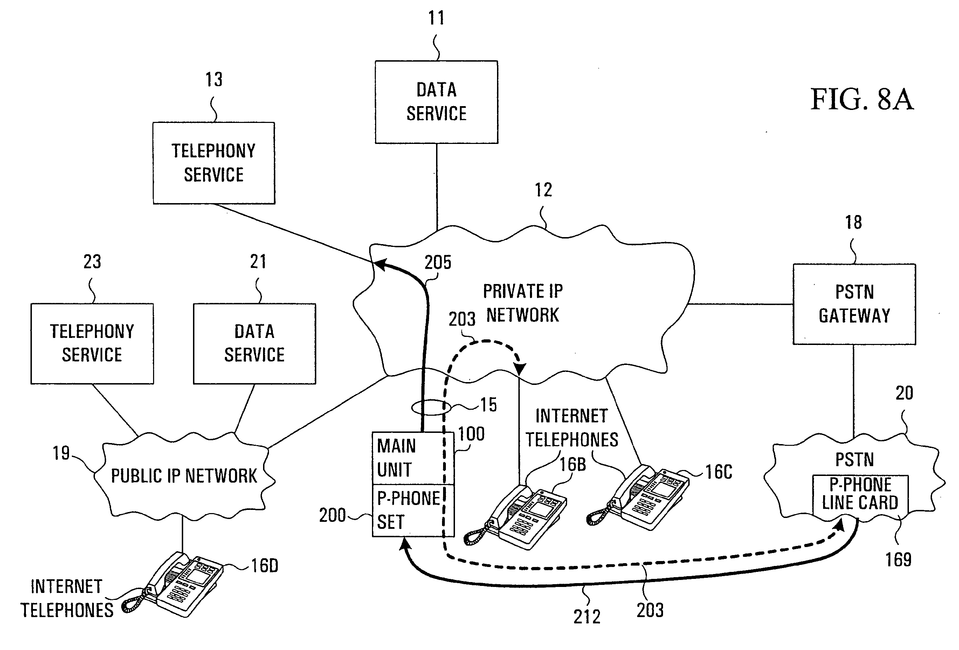

Referring now to Figure 8A, a fourth embodiment of the invention provides a P-phone set plug-in module 200 shown plugged into a main unit 100 connected to the private IP network 12 through Ethernet connection 15. This module 200 is used to interface with a P-phone line card at the end of a tip/ring loop interface 212 in a central office, for example through line 212 to P-phone line card 169 in the PSTN 20. With this module 200, the main unit 100 can run as a stand-alone set emulating the functions of a P-phone set connected to line card 169.

In an alternative configuration, rather than acting as a stand-alone set, the main unit 100 with the P-phone set card 200 installed may be connected through the main set's Ethernet interface 15 to the IP network 12 so as to provide a gateway function to another device connected anywhere to the IP network. Referring again to Figure 8A, in this configuration, the set again is connected through link 212 to the P-phone line card 169. However, the communications from the P-phone line card 169 are not terminated in the main unit 100, but rather they are converted to a second protocol and shipped out the main unit's Ethernet connection 15 to another device through the IP network 12, for example to H.323 phone 16B. In this case, the connection between the H.323 phone 16B and the P-phone line card 169 is indicated by path 203. There are a number of options for providing the H.323 translation some of which require additional functionality in the P-phone set plug-in module. In one option, the plug-in module 200 converts from P-phone signaling to the local protocol which is sent to an H.323 proxy server for conversion to H.323. In a second option, the plug-in module converts from P-phone signaling to the local protocol which is then converted to H.323 protocol. In a third option, the plug-in module 200 is configured to convert directly from the P-phone signaling to the H.323 protocol.

In the event that remote access to a P-phone line card 169 is to be provided as through path 203 for example, the P-phone set card 200 does not need to control the user interface of the main unit 100, and that can be used for a second conversation over the Ethernet connection 15 for example through path 205.

During a power failure, such a configuration can be used as a Fail-to-POTS set. With appropriate energy saving strategies which would result in all but essential functions being shut down, the main unit 100 could run from tip/ring loop powering. In this scenario, the main unit 100 could be used as an emergency set. The same would also be true if the Ethernet network failed.

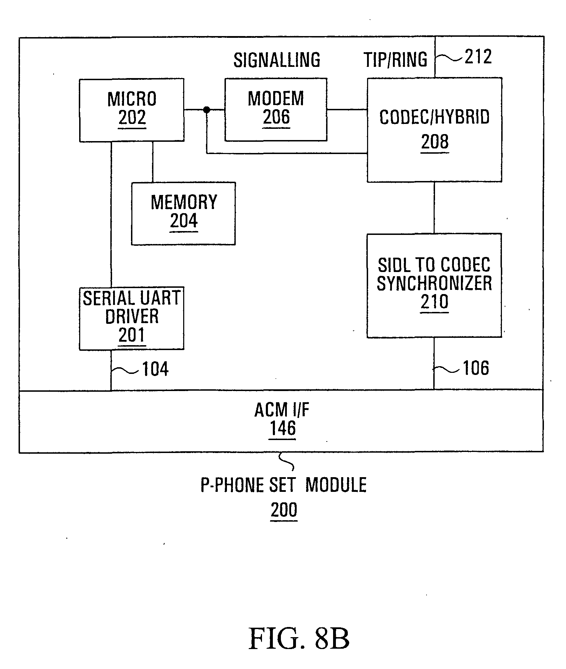

Referring now to Figure 8B, details of the P-phone set plug-in module 200 will now be described. There is a microprocessor 202 with memory 204, and connected through a serial UART interface driver 201 to the ACM I/F 146'. The microprocessor 202 is connected through a modem 206 and directly to a codec/hybrid 208 which is in turn connected through a SIDL to codec synchronizer 210 to the ACM I/F 146. The codec/hybrid 208 has a tip/ring interface 212 through which the resulting P-phone is to be connected to the P-phone line card 169 in the PSTN 20.

As in the previous examples, the audio on this module can be delivered to the main unit 100 by using an analog input/output channel 108 (not shown) directly to the codec 96 of the main unit, or by digitizing the signals using the codec/hybrid 208 and then sending the digitized signals through the SIDL to codec synchronizer circuit 210 to interface with SIDL in a digital format.

The modem 206 is used to modulate/demodulate the P-phone signaling channel and pass this information to the microprocessor 202. The microprocessor 202 can further process this information before passing it to the main unit microprocessor 33 in the main unit 100.

More details of the functionality required of the plug-in module for each of the above introduced connection scenarios will now be provided starting with the P-phone set module under the assumption that there will be no Ethernet connection, but rather only a connection 212 to PSTN 20 via P-phone line card 169 in a central office. The module 200 turns the main unit 100 into a P-phone. The module microprocessor 202 must translate the P-phone protocol on the PSTN network connection, into the local protocol. Example messages include key presses, LCD messages, audio levels, alerting. The module microprocessor 202 maps P-phone LCD messages into local protocol messages where the main unit LCD is different from a P-phone LCD.

The module microprocessor 202 is also responsible for managing the power consumption of the main unit 100. If there is a power failure, the microprocessor 202 should tell the main unit microprocessor (via local protocol messages) to power-off certain functions. This will allow a call connection to be maintained using central office loop powering. The microprocessor can reduce the audio levels, restrict conversations to handset only, not handsfree, reduce LCD information or even power the LCD off.

More details of the functionality required of the plug-in module 200 for the above introduced connection scenario in which there is an Ethernet connection 15 and a connection to PSTN 20 via P-phone line card 169 in central office will now be provided. The module 200 turns the main unit 100 into a P-phone similar to above when the Ethernet connection 15 goes down.

When the Ethernet connection 15 is available, the module can act as a P-phone gateway between the IP network 12 and the PSTN 20. The main unit 100 can make calls to either the PSTN 20 or through the IP network 12. Loss of power is not a requirement for this connection to be established. When the main unit 100 calls the PSTN 20, the module microprocessor 202 performs P-phone protocol translations to the local protocol as described in the first case.

When the main unit 100 makes calls through the IP network (illustrated as connection 205), the module 200 can act as a PSTN gateway for a different IP network call (illustrated as connection 203). In effect, this allows two voice connections at the same time, one terminated at the main unit 100 and the other terminated at the PSTN 20.

The module microprocessor 202 must translate several protocols to establish/maintain a voice connection between the IP network 12 and the PSTN 20. The PSTN 20 uses the P-phone messaging protocol, the IP network uses H.323, and the main unit 100 uses the local protocol. The microprocessor 202 instructs the main unit 100 to pass IP messages to it thus giving the microprocessor 202 access to/from the IP network 12. All these messages are encapsulated with the local protocol. The module microprocessor 202 implements not only the protocol conversion software between H.323 and P-phone, but also implements the call model for an H.323 IP phone (towards the IP network) and a software call model of a P-phone (towards the PSTN). The microprocessor 202 makes the IP network 12 think it is talking to an H.323 IP phone. The microprocessor makes the PSTN 20 think it is talking to a P-phone. This requires the microprocessor 202 to not only translate between the protocols, but also follow the call states that each type of phone would present to their respective networks. In essence, the microprocessor is emulating two distinct phone sets in software.

### POTS Set Module

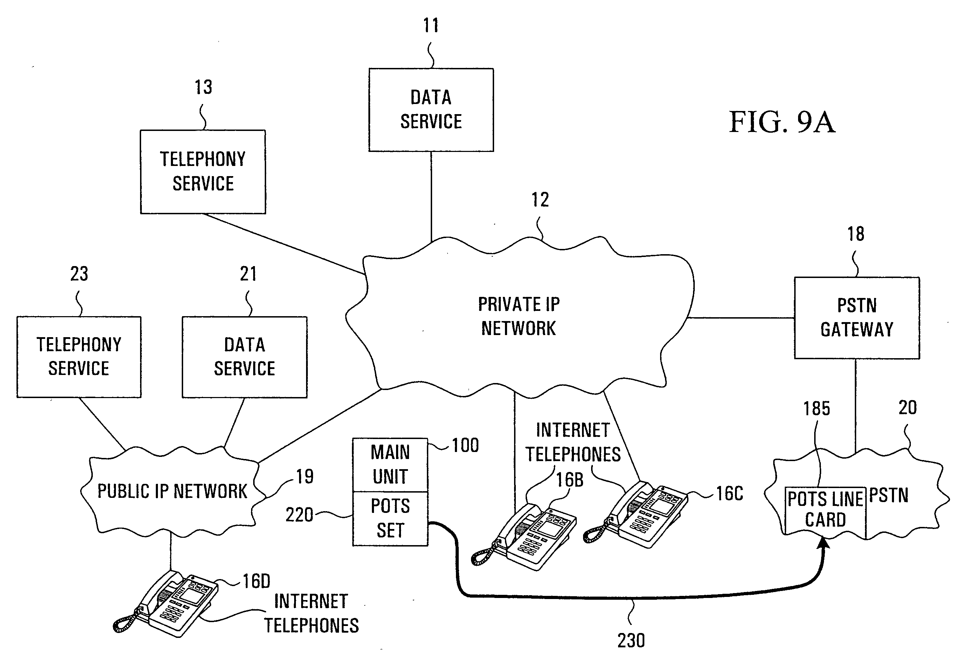

Referring now to Figure 9A, a fifth embodiment of the invention provides a POTS (plain old telephone set) set plug-in module 220 shown plugged into a main unit 100.

This accessory 220 is used to interface with a POTS line card 185 at a switch in the PSTN 20 at the end of a tip/ring loop interface 230. Any POTS Central Office Line Card can be supported. Although not illustrated, the same functionality can be provided for the POTS set module as for the P-phone set module, namely that which allows POTS to be converted to a second protocol, such as H.323 and shipped out to another main unit 100 on the network through the Ethernet interface, and that which allows a second conversation to be handled by the main unit at the same time.

During a power failure, the set can be used as a Fail-to-POTS set. With appropriate energy saving strategies, the set could run from tip/ring loop powering. In this scenario, the set could be used as an emergency set. The same would also be true if the Ethernet network failed.

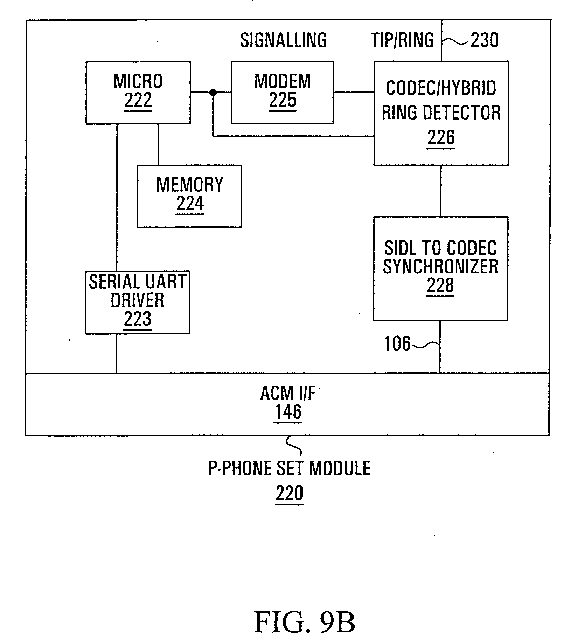

Referring now to Figure 9B, details of the POTS set plug-in module 220 will now be described. There is a microprocessor 222 with memory 224, and connected through a serial UART interface driver 223 to the ACM I/F 146. The microprocessor 222 is connected to a codec/hybrid ring detector 226 which is connected through the tip/ring interface 230 to the PSTN line card 185. The codec/hybrid ring detector block 226 is connected through a SIDL to codec synchronizer 228 to the SIDL channel 106. Alternatively, the codec/hybrid ring detector 226 may be replaced with a hybrid ring detector, with analog signals being sent to/from the analog input/output channel 108 as in previous embodiments.

A modem 225 could be used to demodulate the CLASS signaling channel to support Caller ID from the Central Office. The microprocessor 222 can process this information or, the CLASS signaling demodulation could be performed by the DSP 24 in the main unit 100.

The module microprocessor 222 is responsible for monitoring the tip/ring interface 230 for detection of tones on tip/ring, detection of ringing, sending of DTMF digits, formatting and reception of CLASS type messaging.

Depending upon whether only a PSTN connection is to be made, or both a PSTN and Ethernet connections are to be made, the module requires different functionality.

When there is no Ethernet connection 15, but rather only a connection to PSTN via a POTS line card in central office, the module 220 turns the main unit 100 into a POTS phone. The module microprocessor 222 must translate central office loop signaling, and the CLASS messaging protocol on the PSTN network connection, into local protocol. Example messages include key presses, LCD messages, audio levels, alerting. The module microprocessor 222 also maps CLASS LCD messages into local protocol LCD messages where the main unit LCD is different from a POTS LCD. CLASS could also include the ADSI protocol.

The module microprocessor 222 may also be responsible for managing the power consumption of the main unit 100. If there is a power failure, the microprocessor must tell the main unit microprocessor (via local protocol messages) to power-off certain functions. This will allow a call connection to be maintained using central office loop powering. The microprocessor can reduce the audio levels, restrict conversations to handset only, not handsfree, reduce LCD information or even power the LCD off.

When there is also an Ethernet connection 15 the module 220 is preferably designed to turn the main unit into a POTS phone similar to above when the Ethernet connection goes down.

When the Ethernet connection 15 is available, the module can act as an analog gateway between the IP hetwork 12 and the PSTN 20. The main unit 100 can make calls to either he PSTN 20 or through the IP network 12. Loss of power is not a requirement for this connection to be established.

When the main unit calls the PSTN 20, the module microprocessor 222 performs POTS/CLASS signaling translations to the local protocol as described above without the Ethernet connection 15.

When the main unit makes calls through the IP network 12, the module 222 can act as an analog gateway for a different IP network call. This allows two voice connections at the same time one of which is terminated at the main unit 100, the other of which is terminated at the PSTN 20.

The module microprocessor 222 must translate several protocols to establish/maintain a voice connection between the IP network 12 and the PSTN 20. The PSTN 20 uses POTS unit 100 signaling, the IP network 12 uses H.323, and the main unit 100 uses local protocol. The microprocessor 222 instructs the-main unit 100 to pass IP messages to it thus giving the microprocessor access to/from the IF network12. All these messages are encapsulated with the local protocol.

The module microprocessor 222 implements not only the protocol conversion software between H.323 and POTS signaling, but also implements the call model for an H.323 IP phone (towards the IP network 12) and a software call model of a POTS phone (towards the PSTN). The microprocessor 222 makes the IP network 12 think it is talking to an H.323 IP phone. The microprocessor 222 makes the PSTN 20 think it is talking to a 30 POTS phone. This requ the microprocessor 222 to not only translate between H.323 and POTS signaling, but also follow the call states that each type of phone would present to their respective networks. In essence, the microprocessor is emulating two distinct phone sets in software.

In another embodiment, a module is provided which provides a hub function for IP by providing a PC port. This allows the main unit to connect itself to the IP network through the Ethernet, and at the same provides connectivity for a PC through the port. This eliminates the need for a second IP drop. Such a hub function might be configured to provide some QoS control such that voice IP packets are given higher priority than the PC originated packets. The PC port might support modems used by PCs. For example, a PC might have a 56k modem or a 1 meg DSL high speed modem. The module can be configured to drive the PC's modem similar in concept to the POTS line card driving a set. Also, the modem could be terminating the connection, like in set mode. Such modules allow the main unit to be connected to the system via an analog modem or via the new 1 meg modem or other high speed ADSL, xDSL, HDSL technology.

In another embodiment, a module is provided which is capable of driving specialty headsets designed for the hearing impaired or normal hearing users. Many aspects of speech reproduction may be controlled to make the units function as required. Also, a stereo output can be provided for access to wideband audio channels on servers or on the internet (ie real audio, real jukebox,, etc).

The illustrated embodiments have featured a main unit with a single slot for receiving a plug-in module. It is to be understood that additional slots might be provided for receiving multiple plug-in modules simultaneously.

The illustrated embodiments have featured a main unit with an Ethernet port connectable to an IP network. More generally, when set cards only are to be implemented, there is no need for an additional external port to that provided by the set card. When an additional external port is provided, then the additional options discussed above can be implemented. These do not necessitate the additional external port to be Ethernet. It could be any suitable link to the network, such as a fibre optic link for example, presuming that suitable termination hardware is provided in the main unit. In general, when the main unit has an external port, it will be assumed to be capable of communicating through its external port using some external protocol.

Numerous modifications and variations of the present invention are possible in light of the above teachings. It is therefore to be understood that within the scope of the appended claims, the invention may be practised otherwise than as specifically described herein.

## Claims

1. A telephone main unit for use in combination with a plug-in module, the telephone main unit comprising:
user interface hardware;
one or more processors adapted to interact with the user interface hardware through the use of local protocol messages;
an interface for receiving the plug-in module;
wherein local protocol commands generated by the hardware are divertable to the plug-in module;
wherein local protocol commands received from the plug-in module which relate to the user interface hardware are used to control the user interface hardware.

2. A main unit according to claim 1 including a data network interface operating on a first external protocol;
wherein commands of said first external protocol received over the data network interface are divertable to the plug-in module; and
wherein commands of said first external protocol received from the plug-in module are sent through the data network interface.

3. A main unit according to claim 1 or claim 2 adapted to establish a media stream and a control path between the network connection and the plug-in module.

4. A main unit according to claim 1 or claim 2 adapted to establish a media stream and a control path between the plug-in module the user interface hardware.

5. A main unit according to claim 1 or claim 2 adapted to establish a control path from the network connection to the plug-in module, and back from the plug-in module to the user interface hardware, and to establish a media stream path between the network connection and the user interface hardware.

6. A main unit according to claim 1 or claim 2 adapted to establish a first media stream and a first control path between the network connection and the plug-in module and to establish a second media stream and a second control path between the plug-in module the user interface hardware.

7. A main unit according to claim 1 or claim 2 adapted to establish a first media stream and a first control path between the network connection and the plug-in module and to establish a second control path from the network connection to the plug-in module, and back from the plug-in module to the user interface hardware, and to establish a second media stream path between the network connection and the user interface hardware.

8. A main unit according to claim 1 or claim 2 adapted to establish a first media stream and a first control path between the network connection and the plug-in module and to establish a second control path from the network connection to the user interface hardware, and to establish a second media stream path between the network connection and the user interface hardware.

9. A main unit according to claim 1 or claim 2 adapted to encapsulate in the local protocol said commands of the first external protocol received over the network interface before diverting them to the plug-in module, and wherein commands of said external protocol received from the plug-in module are also encapsulated in the local protocol.

10. A main unit according to claim 1 or claim 2 in combination with the plug-in module.

11. A plug-in module for use in combination with a telephone main unit, the plug-in module comprising:
one or more processors adapted to interact with the main unit through the use of local protocol messages;
an interface for connecting to the main unit;
the plug-in module being adapted to:
receive local protocol commands from the main unit through the interface;
receive commands of a first external protocol through the interface;
generate local protocol commands to control the main unit's user interface and pass these to the main unit through the interface;
generate commands of the first external protocol and pass these to the main unit through the interface.

12. A plug-in module according to claim 11 further comprising an external interface, the plug-in module being further adapted to communicate through the external interface using a second external protocol.

13. A plug-in module according to claim 12 adapted to establish both media stream and control paths from the external interface to the main unit in the local protocol.

14. A plug-in module according to claim 13 adapted to take control through said control path of user interface hardware in the main unit.

15. A plug-in module according to claim 11 adapted to establish a control path from the main unit and back.

16. A plug-in module according to claim 13 adapted to establish a first media stream and a first control path between the second external interface and the main unit for subsequent direction out a main unit external interface, and to establish a second media stream and a second control path from the external interface to the main unit for subsequent direction to control the main unit's user interface hardware.

17. A plug-in module according to claim 13 adapted to establish a first media stream and a first control path between the second external interface and the main unit for subsequent direction out the main unit's first external interface, and to establish a second control path from the main unit through the plug-in module and back to the main unit.

18. A plug-in module according to claim 11 adapted to perform a translation from said first external protocol to the local protocol.

19. A plug-in module according to claim 12 adapted to perform a translation from said second external protocol to the local protocol.

20. A plug-in module according to claim 16 adapted to perform a translation from said second external protocol to the first external protocol.

21. A plug-in module according to claim 11 wherein the media stream path is in analog form.

22. A plug-in module according to claim 11 further wherein the media stream path is in digital form.

23. A plug-in module according to claim 12 comprising a modem for extracting received second external protocol commands and for modulating second external protocol commands to be sent.

24. A plug-in module according to claim 11 wherein the first external protocol is H.323.

25. A plug-in module according to claim 11 adapted for P-phone line card functionality, the plug-in module comprising:
a tip/ring interface for connection to a P-phone and a connection through the interface for exchanging audio signals between the tip/ring interface and the main unit;
a modem adapted to modulate/demodulate a P-phone signaling channel at said tip/ring interface and pass this information to/from a processor;
the processor adapted to pass P-phone signaling channel messages to and from the modem, and to translate P-phone signaling received from the modem to local protocol commands and pass these to the main unit and to translate local protocol commands received from the main unit to P-phone signaling and pass these to the modem.

26. A plug-in module according to claim 11 adapted for POTS line card functionality, the plug-in module comprising:
a tip/ring interface for connection to a POTS (plain old telephone set) and a connection through the interface for exchanging audio signals between the tip/ring interface and the main unit;
a modem adapted to modulate/demodulate CLASS signaling received over the tip/ring interface;
a processor adapted to translate CLASS signaling received from the modem to fixed local protocol commands and pass these to the main unit.

27. A plug-in module according to claim 11 adapted for P-phone set functionality, the plug-in module comprising:
a tip/ring interface for connection to a P-phone line card and a connection through the interface for exchanging audio signals between the tip/ring interface and the main unit;
a modem adapted to modulate/demodulate a P-phone signaling channel at said tip/ring interface and pass this information to/from a processor;
the processor adapted to pass P-phone signaling channel messages to and from the modem, and to translate P-phone signaling received from the modem to local protocol commands and pass these to the main unit and to translate fixed local protocol commands received from the main unit to P-phone signaling and pass these to the modem.

28. A plug-in module according to claim 11 adapted for POTS phone set functionality, the plug-in module comprising:
a tip/ring interface for connection to a POTS line card and a connection through the interface for exchanging audio signals between the tip/ring interface and the main unit;
a modem adapted to modulate/demodulate CLASS signaling over the tip/ring interface;
a processor adapted to translate CLASS signaling received from the modem to local protocol commands and pass these to the main unit.

29. A plug-in module according to claim 11 wherein said interface comprises a slow speed digital channel, an analog channel, and a UART channel.

30. A plug-in module according to any one of claims 11 to 29 wherein said first external protocol is selected from the group of ISDN, SIP, xDSL, Blue Tooth wireless, CT2 + wireless, Universal Serial Bus (USB), RS-232, POTS with V.90 modem, IrDA, MGPC, MEGACO, H.248, Nortel TCM.

31. A plug-in module according to claim 11 adapted to implement a functional model of each external interface, and a translation between these functional models.
